# EUROPÄISCHE PATENTSCHRIFT

(11) **EP 2 856 143 B1**
(45) Veröffentlichungstag und Bekanntmachung des Hinweises auf die Patenterteilung: **04.09.2019**
(21) Anmeldenummer: 13730136.2
(22) Anmeldetag: 29.05.2013
(51) Int. Cl.: G01N 31/22, G01N 21/64, G01N 21/77

(54) **OPTISCHES SENSORELEMENT**
OPTICAL SENSOR ELEMENT
ÉLÉMENT CAPTEUR OPTIQUE

(30) Priorität: 30.05.2012 DE 102012104688
(43) Veröffentlichungstag der Anmeldung: 08.04.2015
(73) Patentinhaber: Hamilton Bonaduz AG, 7402 Bonaduz (CH)
(72) Erfinder: SCHOENFUSS, Dirk, CH-7015 Tamins (CH); ORTEGA SCHULTE, Claudius-Michael, CH-7402 Bonaduz (CH)
(74) Vertreter: Baumann, Rüdiger Walter
(86) Internationale Anmeldenummer: PCT/EP2013/061139
(87) Internationale Veröffentlichungsnummer: WO 2013/178723

(56) Entgegenhaltungen:
- EP-B1- 1 757 924
- DE-A1- 3 900 191
- GB-A- 1 190 583
- US-A- 5 173 432
- US-A1- 2011 236 989
- US-A1- 2011 266 449
- OPITZ N ET AL: "Single molecule FCS-based oxygen sensor (O2-FCSensor): a new intrinsically calibrated oxygen sensor utilizing fluorescence correlation spectroscopy (FCS) with single fluorescent molecule detection sensitivity", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 96, Nr. 1-2, 15. November 2003 (2003-11-15), Seiten 460-467, XP004473769, ISSN: 0925-4005, DOI: 10.1016/S0925-4005(03)00601-4
- PAPKOVSKY D B ET AL: "PHOSPHORESCENT COMPLEXES OF PORPHYRIN KETONES: OPTICAL PROPERTIES AND APPLICATION TO OXYGEN SENSING", ANALYTICAL CHEMISTRY, AMERICAN CHEMICAL SOCIETY, US, Bd. 67, Nr. 22, 15. November 1995 (1995-11-15), Seiten 4112-4117, XP001061818, ISSN: 0003-2700, DOI: 10.1021/AC00118A013
- PAPKOVSKY DMITRI B: "Methods in optical oxygen sensing: protocols and critical analyses", METHODS IN ENZYMOLOGY; [METHODS IN ENZYMOLOGY], ACADEMIC PRESS, US, Bd. 381, 1. Januar 2004 (2004-01-01), Seiten 715-735, XP008152869, ISSN: 0076-6879

## Beschreibung

### Optisches Sensorelement

Die vorliegende Erfindung betrifft ein Sensorelement sowie einen Sensor umfassend ein solches Sensorelement, wobei die im Sensorelement enthaltenen Sensorverbindungen (Indikatoren) vor zerstörenden oder inaktivierienden Einflüssen wie z.B. hoch reaktiven Verbindungen geschützt sind. Die Erfindung betrifft weiterhin die Verwendung des Sensorelements und des Sensors zur Bestimmung eines Analyten in einer für die Indikatoren aggressiven Umgebung.

Allgemein bekannt sind Sensoraufbauten, enthaltend anregbare Sensorverbindungen (Indikatoren). Das Sensorprinzip basiert darauf, dass die Indikatoren zunächst durch Zufuhr von Anregungsenergie in einen angeregten Energiezustand überführt werden. Unter Energieabgabe, z.B. in Form von Licht einer bestimmten Wellenlänge, gehen die Indikatoren in ein niedrigeres Energieniveau über. Die Bestimmung eines Analyten in einer Probe erfolgt in der Regel durch Messung der von den Indikatoren emittierten Energie, die bei einem Kontakt mit einem Analyten für einen Nachweis hinreichend verändert ist.

Ausgehend von der Anregungs- und Emissionsenergieform können verschiedene Sensortypen unterschieden werden. Die Anregung der Indikatoren optischer Sensoren kann z.B. durch Zufuhr von Licht, chemischer oder elektrischer Energie erfolgen, wobei die Emission jeweils in Form von Licht einer definierten Wellenlänge erfolgt. Bei rein optischen Sensoren erfolgen Anregung und Emission der Indikatoren jeweils in Form von Licht einer bestimmten Anregungs (v₁)- und Emissions (v₂)-wellenlänge. Optische Sensoren werden z.B. für die Bestimmung von Sauerstoff, Halogenid- und Schwermetallionen, Kohlendioxid (CO₂) und des pH-Wertes eingesetzt. Das Sensorprinzip kann hierbei auf der Messung der Lumineszenzlöschung, der Veränderung der Lumineszenzabklingzeit und/oder der Absorption von Lichtwellen basieren.

Zur optischen Messung von gelöstem Sauerstoff werden gegenwärtig Sensoren eingesetzt, welche auf der Eigenschaft von bestimmten Lumineszenzindikatoren beruhen, deren durch Lichteinstrahlung einer bestimmten Wellenlänge v₁ angeregte Lumineszenz mit der Wellenlänge v ₂ in Anwesenheit von Sauerstoff dynamisch gelöscht wird, wobei der angeregte Zustand des Lumineszenzindikators durch Sauerstoff strahlungslos deaktiviert wird.

Für eine zuverlässige Bestimmung eines Analyten in komplexen Medien sind optische Sensoren weit verbreitet, da die hier angewandten Messmethoden vergleichsweise einfach sind und einen geringen apparativen Aufwand erfordern. Herkömmliche optische Sensoren haben aber den Nachteil, dass deren Sensorelemente keinen ausreichenden Schutz der hierin befindlichen Indikatoren vor zerstörenden Einflüssen, insbesondere reaktiven Verbindungen, aus der zu analysierenden Umgebung bieten. Die Betriebslebensdauer bekannter Sensorelemente ist daher insbesondere dann sehr begrenzt, wenn die Indikatoren Bedingungen ausgesetzt werden, unter denen sie dauerhaft bzw. irreversibel inaktiviert werden.

Bei verschiedenen Anwendungen enthält das zu analysierende Medium beispielsweise Verbindungen, die die Indikatoren durch eine chemische Reaktion zerstören. So besteht etwa im Stand der Technik das Problem, dass die für eine Bestimmung von molekularem Sauerstoff derzeit zur Verfügung stehenden optischen Sensorelemente nicht oder nur mit sehr begrenzter Lebensdauer eingesetzt werden können, wenn das zu analysierende Medium wie z.B. Abwasser oder Wasser von Schwimmbädern, starke Oxidationsmittel wie Ozon, Superoxid, Hydroxylradikale oder zur Desinfektion eingesetzte Chlor- oder Peroxidverbindungen aufweist, deren Diffusion zu den Indikatoren im Sensorelement nicht verhindert werden kann und ein Kontakt zu einer oxidativen Inaktivierung der Indikatoren führt. Durch den fehlenden Schutz der Indikatoren sind herkömmliche Sensorelemente unter diesen Bedingungen nicht oder nur sehr eingeschränkt geeignet.

Es besteht daher ein Bedarf an optischen Sensoren für den Lumineszenznachweis von Analyten in komplexen Medien, bei denen die Lumineszenzindikatoren der Sensorelemente wirksam vor zerstörenden/inaktivierenden Einflüssen aus der zu analysierenden Umgebung geschützt sind.

Aus CN 102109488 A sind lediglich mehrschichtige elektrochemische Sauerstoffsensoren bekannt, deren Indikatoren durch eine zwischen dem Medium und der Indikator-tragenden Schicht angeordnete Edelmetall-dotierte Schicht mit katalytischer Funktion geschützt sind.

US 2011/236989A1 offenbart Analytsensoren, bei denen fluoreszierende Indikatoren und die Indikatoren schützende Antioxidantien in eine Polymermatrix eingebettet sind oder bei der ein fluoreszierendes Indikatorsystem von einer schützenden Schicht von Antioxidantien umgeben ist.

Optische Sensoren, deren Sensorelemente die Indikator-tragende(n) Schicht(en) gegen Angriffe reaktiver Verbindungen wirksam schützen und so eine dauerhafte Bestimmung eines Analyten mittels Lumineszenzmessung in einer für die Indikatoren aggressiven (chemischen) Umgebung ermöglichen, sind jedoch aus dem bisherigen Stand der Technik weder bekannt noch aus diesem herleitbar.

Die vorliegende Erfindung stellt ein optisches Sensorelement bereit, umfassend
a) Indikatoren, die je nach Einsatzzweck ausgewählt sind aus gleichartigen oder verschiedenen Lumineszenz-aktiven Mitteln, und
b) Indikatorprotektoren.

Die Indikatorprotektoren des erfindungsgemäßen Sensorelements sind derart ausgewählt, dass sie die Indikatoren vor zerstörenden/inaktivierenden Einflüssen und insbesondere solchen zerstörenden/inaktivierenden Einflüssen, denen das Sensorelement bei der vorgesehenen Verwendung ausgesetzt ist, schützen.

Der Begriff "optisches Sensorelement" im Zusammenhang mit der vorliegenden Erfindung umfasst Elemente eines Sensors, die Lumineszenzindikatoren enthalten. Als Lumineszenzindikatoren werden Moleküle, Verbindungen bzw. Substanzen verstanden, die die Eigenschaft aufweisen, nach Anregung durch eine bestimmte Energiemenge, Licht einer definierten Wellenlänge zu emittieren (lumineszieren). Zudem haben Lumineszenzindikatoren die Eigenschaft, dass ihre Lumineszenz in Gegenwart einer bestimmten Verbindung/Substanz oder Gruppe von Verbindungen/Substanzen hinsichtlich Intensität, Dauer und/oder Wellenlänge charakteristisch verändert ist. Substanzen, welche die Lumineszenz der für sie selektiven Indikatoren in charakteristischer Weise verändern, können mittels Messung der Lumineszenzänderung(en) als Analyt je nach Sensoraufbau und Messmethode quantitativ und/oder qualitativ bestimmt werden. Grundsätzlich können alle dem Fachmann bekannten Lumineszenzindikatoren im erfindungsgemäßen Sensorelement eingesetzt werden. Geeignete Lumineszenzindikatoren sind z.B. Chemolumineszenz-, Elektro(chemo)lumineszenz-, Thermolumineszenz-, Radiolumineszenz-, Sonolumineszenz-, Photolumineszenzindikatoren und Kombinationen davon. Für den Einsatz im erfindungsgemäßen Element sind Photolumineszenzindikatoren, d.h. fluoreszierende und/oder phosphoreszierende Indikatoren besonders geeignet.

Das erfindungsgemäße Sensorelement gemäß Anspruch 1 ist bevorzugt derart ausgestaltet, dass es in optischen Sensoren verwendet werden kann.

Das erfindungsgemäße optische Sensorelement ist mehrschichtig, wenigstens zweischichtig, bevorzugt zwei-, drei-, vier-, fünf- oder sechsschichtig aufgebaut, wobei die Indikatoren und Indikatorprotektoren in mindestens einer der Schichten des Elements angeordnet sind. Die Schichten können derart aufgebaut und angeordnet sein, dass sie innerhalb des Elements verschiedene Funktionen erfüllen. Die Schichten innerhalb des mehrschichtigen Elements können sich hinsichtlich Schichtdicke, Zusammensetzung und/oder Konzentration der Matrixbestandteile und/oder darin inkorporierter Bestandteile unterscheiden. Der segmentierte, schichtweise Aufbau bietet dadurch u.a. den Vorteil, dass das Element spezifisch für den jeweiligen Einsatzzweck konstruiert bzw. an diesen adaptiert werden kann.

Die Indikator-tragende(n) und Indikatorprotektoren-tragende(n) Schicht bzw. Schichten des erfindungsgemäßen Elements sind bevorzugt als Membranen ausgestaltet mit einer an den jeweiligen Einsatzzweck des Elements angepassten Dicke der einzelnen Schichten von 0,001 bis 1mm, bevorzugt von 0,005 bis 0,5mm, mehr bevorzugt von 0,01 bis 0,2mm. Insbesondere Membranen mit geringer Schichtdicke im Bereich von 10 bis 200µm haben den Vorteil, dass die Diffusionsgeschwindigkeit des Analyten hin zu den Indikatoren für dessen Bestimmung hinreichend groß ist und von den Indikatoren emittiertes Licht ohne nachteilige Transmissionsverluste zur optischen Detektionseinheit des Sensors gelangen kann.

Indikatoren und die Indikatorprotektoren sind in verschiedenen Schichten des mehrschichtigen, wenigstens zweischichtigen Elements angeordnet, d.h. das Element umfasst mindestens eine Indikatoren-tragende Schicht, in der primär die Indikatoren vorliegen und mindestens eine Indikatorprotektoren-tragende Schicht, in der primär die Indikatorprotektoren vorliegen. Bevorzugt sind die Indikatoren und Indikatorprotektoren in den jeweiligen Schichten immobilisiert, so dass deren Diffusion in andere Schichten verhindert wird. Eine Immobilisierung kann z.B. durch kovalente Bindung der Indikatoren und Indikatorprotektoren an Matrixbestandteile der jeweiligen Schicht erfolgen. Besonders bevorzugt ist/sind zumindest die Indikatorprotektoren-tragende(n) Schicht(en) des Sensorelements frei oder im Wesentlichen frei von Indikatoren.

Es umfasst das erfindungsgemäße Sensorelement mindestens eine Schicht umfassend Indikatoren und optional Indikatorprotektoren und mindestens eine weitere Schicht umfassend Indikatorprotektoren, wobei die mindestens eine weitere, Indikatorprotektoren-tragende Schicht frei oder im Wesentlichen frei von Indikatoren ist.

Es umfasst das erfindungsgemäße Sensorelement mindestens eine Schicht umfassend Indikatoren und mindestens eine weitere Schicht umfassend Indikatorprotektoren, wobei die mindestens eine Indikatoren-tragende Schicht frei oder im Wesentlichen frei von Indikatorprotektoren und die mindestens eine Indikatorprotektoren-tragende Schicht frei oder im Wesentlichen frei von Indikatoren ist.

Das optische Sensorelement der vorliegenden Erfindung ist in einer bevorzugten Ausführungsform derart ausgestaltet, dass die Indikatorprotektoren in einer das Medium berührenden (medienberührenden) Schicht (1) und/oder in mindestens einer dem Medium zugewandten und auf die medienberührende Schicht (1) aufgebrachten Schicht des Elements angeordnet sind und die Indikatoren in mindestens einer Schicht (2), welche auf die dem Medium abgewandte Seite der Indikatorprotektoren-tragende(n) Schicht(en) (1) oder aufgebracht ist, angeordnet sind. Besonders bevorzugt ist hierbei die Schicht (1) und/oder die mindestens eine Schicht frei oder im Wesentlichen frei von Indikatoren. Die mindestens eine Schicht (2) kann neben den Indikatoren auch Indikatorprotektoren enthalten. Sie ist bevorzugt frei oder im Wesentlichen frei von Indikatorprotektoren.

Ein mindestens zweischichtiger Aufbau, in welchem der mindestens einen Indikatoren-tragende Schicht medienseitig mindestens eine Indikatoren-freie oder im Wesentlichen Indikatoren-freie Indikatorprotektoren-tragende Schicht vorgelagert ist, bietet den Vorteil, dass die Gesamtheit der im erfindungsgemäßen Sensorelement inkorporierten Indikatoren gleichermaßen wirksam vor inaktivierenden/zerstörenden Einflüssen aus dem Medium geschützt ist.

Eine bevorzugte Ausgestaltung (I) des erfindungsgemäßen Sensorelements umfasst den folgenden schichtweisen Aufbau:
- Eine Schicht (1) mit einer zum Medium gewandten und das Medium kontaktierenden Seite (1.1) und einer vom Medium abgewandten, der Seite (1.1) gegenüberliegenden Seite (1.2), wobei diese medienberührende Schicht (1) die Indikatorprotektoren umfasst und bevorzugt frei oder im Wesentlichen frei von Indikatoren ist.
- Eine Schicht (2) mit einer die Schicht (1) kontaktierenden Seite (2.1) und einer der Seite (2.1) gegenüberliegenden Seite (2.2), wobei die Schicht (2) auf die Seite (1.2) der Schicht (1) aufgebracht ist und die Indikatoren und optional Indikatorprotektoren umfasst.
- Optional eine oder mehrere weitere Schichten (2), die auf die bereits vorliegende Schicht (2) aufgebracht ist bzw. sind und Indikatoren und optional Indikatorprotektoren enthalten können.

Optional kann zwischen der Schicht (1) und der mindestens einen Schicht (2) mindestens eine weitere Schicht angeordnet sein, welche Indikatorprotektoren umfassen kann und bevorzugt frei oder im Wesentlichen frei von Indikatoren ist.

Eine weitere bevorzugte Ausgestaltung (II) des erfindungsgemäßen Sensorelements sieht im Unterschied zur vorstehenden Ausgestaltung (I) vor, dass die medienberührende Schicht (1) sowohl frei von Indikatoren als auch frei von Indikatorprotektoren ist und die mindestens eine weitere Schicht obligatorisch ist.

Art, Menge und Verteilung der Indikatorprotektoren in den Schichten (1) und ggf. (2) des Sensorelements können verschieden sein. Bevorzugt sind die Indikatorprotektoren in der mindestens einen Schicht (2), die zugleich Indikatoren enthält, zu einem geringeren Anteil als in der Schicht (1) und/oder der mindestens einen weiteren Schicht enthalten.

Insbesondere bei Verwendung von Photolumineszenzindikatoren kann die Schicht (1) und insbesondere deren Seite (1.1) als lichtundurchlässige optische Isolationsschicht ausgestaltet sein. Weiterhin kann die mindestens eine weitere Schicht (2) selbst lichtreflektierend sein. Dies hat den Vorteil, dass die Sensibilität der Messung bei Verwendung des Sensorelements erhöht wird.

In einer besonders bevorzugten Ausführungsform umfasst das erfindungsgemäße Element
i) eine medienberührende, optional lichtundurchlässige Schicht (1), welche frei oder im Wesentlichen frei von Indikatoren ist und optional Indikatorprotektoren enthält,
ii) eine zweite Schicht, welche
   (iia) auf die dem Medium abgewandte Seite der ersten Schicht (1) aufgebracht ist,
   (iib) Indikatorprotektoren enthält,
   (iic) frei oder im Wesentlichen frei von Indikatoren ist und
   (iid) optional lichtreflektierend ist,
(iii) eine dritte Schicht (2), welche
   (iiia) auf die dem Medium abgewandte Seite der zweiten Schicht aufgebracht ist,
   (iiib) die Indikatoren enthält,
   (iiic) frei oder im Wesentlichen frei von Indikatorprotektoren ist und
   (iiid) optional lichtreflektierend ist.

Zur weiteren Erhöhung der Sensorsensibilität des hierin beschriebenen optischen Sensorelements kann/können die Indikatorprotektoren-tragende(n) Schicht(en) von der/den Indikatoren-tragenden Schicht(en) durch mindestens eine lichtreflektierende Schicht, die keine Indikatorprotektoren-tragende Schicht und keine Indikatoren-tragende Schicht ist, separiert sein.

An der dem Medium abgewandten Seite der Indikatoren-tragenden Schicht bzw. bei mehreren Indikatoren-tragenden Schichten, der äußersten, dem Medium gegenüberliegenden, Indikatoren-tragenden Schicht kann weiterhin ein transparentes Substrat angeordnet sein. Das transparente Substrat ist transparent für das Emissionslicht des bzw. der eingesetzten Indikators/Indikatoren und weiterhin transparent für das Anregungslicht, wenn die Anregung der Indikatoren durch Licht bewirkt wird. Das transparente Substrat ist bevorzugt ausgewählt aus Glas, Kunststoff und Glasfasern. Über das transparente Substrat ist bzw. sind die Indikatoren-tragende(n) Schicht(en) vorteilhaft mit einem optischen System gekoppelt. Das optische System kann ein dem Fachmann bekanntes System umfassend eine Detektions-/Messeinheit zur Detektion/Messung der Emission, eine Auswerteeinheit und Mittel zur Anregung der Lumineszenz der Indikatoren - bei Verwendung von Photolumineszenzindikatoren z.B. eine Lichtquelle - sein.

Die Schicht bzw. Schichten des erfindungsgemäßen Elements, insbesondere die Schichten (1) und (2) und etwaige dazwischen angeordnete Schichten sind derart ausgestaltet, dass sie für den bzw. die Analyten permeabel ist bzw. sind. Der Matrixbestandteil der Schicht bzw. Schichten, insbesondere der Schichten (1) und (2) und etwaiger dazwischen angeordneter Schichten des Elements ist bevorzugt ausgewählt aus einem Polymer oder Polymergemisch. Bei einer mehrschichtigen Ausführungsform des erfindungsgemäßen Elements kann der Matrixbestanteil in den einzelnen Schichten hinsichtlich Art, Konzentration und/oder Vernetzungsgrad der Polymergrundbausteine verschieden sein. Innerhalb einer Schicht kann zudem die Konzentration und/oder der Vernetzungsgrad eines Matrixbestandteils oder die Konzentraion eines in der Schicht inkorporierten Bestandteils gradientenförmig variieren.

Besonders bevorzugt ist der Matrixbestandteil ein Polymer oder Polymergemisch, ausgewählt aus Polystyrol, Polyvinylchlorid, Polyalkylmetacrylat, insbesondere Polymethylmetacrylat, Polyisobutylmethacrylat und Poly-2-hydroxyethylmethacrylat, Poly-α-methylstyrol, Kieselgelen, Sol-Gelen, Hydrogelen, Polyurethanen, Polytetrahydrofuranen, Polytetrafluorethylen, Polyester, Polybutadien, Polyvinylbutyral, Polyethylacrylat, Ethylcellulose, Cellulosetriacetat, Cellulose-acetyl-butyrat, Polysulfonen, Polysulfiden und nicht-, teilweise- oder vollständig fluorierten Silikonen sowie Kombinationen daraus, optional in Kombination mit Weichmachern.

Schichten mit lichtreflektierenden Eigenschaften enthalten bevorzugt Pigmente und hierbei bevorzugt Metalloxide wie TiO₂ und Al₂O₃, Halbmetalloxide wie SiO₂ und Kombinationen davon.

Lichtundurchlässige Schichten enthalten bevorzugt Lichtschutzmittel wie z.B. dunkelfarbige und/oder schwarze Pigmente wie z.B. Russ, Graphit, Aktivkohle oder Kombinationen davon.

Wie vorstehend erwähnt, enthält das erfindungsgemäße Sensorelement Indikatoren, welche die Eigenschaft haben, nach Anregung zu lumineszieren und bei Kontakt mit einem oder mehreren Analyten mindestens eine ihrer Lumineszenzeigenschaften messbar zu verändern. Insbesondere sind für die vorliegende Erfindung Indikatoren geeignet, deren Lumineszenzemission bei Kontakt mit mindestens einem Analyten selektiv gelöscht wird.

Die Erfindung betrachtet Analyten, ausgewählt aus einer Sauerstoffspezies, insbesondere molekularen Sauerstoff, Kohlenmonoxid, Kohlendioxid, Halogenidionen, Schwermetallionen, Hydroxylionen, Hydroniumionen, aromatischen Verbindungen und Kombinationen davon. Das erfindungsgemäße Sensorelement ist jedoch nicht auf die Bestimmung dieser Analyten beschränkt.

Es umfasst das erfindungsgemäße Sensorelement Lumineszenzindikatoren und insbesondere Photolumineszenzindikatoren, deren Lumineszenzemissionen bei Kontakt mit Sauerstoff und bevorzugt molekularem Sauerstoff selektiv gelöscht werden. Besonders bevorzugt sind Indikatoren, deren Lumineszenzemissionen in Anwesenheit von Sauerstoff dynamisch gelöscht werden, wobei der angeregte Zustand der Lumineszenzindikatoren bei Kontakt mit Sauerstoff strahlungslos deaktiviert wird. Für die Bestimmung von Sauerstoff besonders geeignete Lumineszenzindikatoren sind Ruthenium-, Rhenium-, Rhodium-, Iridium-Lanthanid-komplexe, metallierte Porphyrine (z.B. Platin- und/oder Palladiumporphyrine), unmetallierte Porphyrine oder Mischungen daraus, optional in Kombination mit fluorierten Farbstoffen und/oder Lichtschutzmitteln. Ausführlich sind für den jeweiligen Einsatzzweck geeignete Lumineszenzindikatoren in der Literatur beschrieben.

Der Anteil der Indikatoren, bezogen auf die jeweilige Indikatoren-tragende Schicht beträgt bis zu 20 Gewichtsprozent, bevorzugt bis zu 10 Gewichtsprozent, mehr bevorzugt bis zu 5 Gewichtsprozent. Der Anteil der Indikatoren kann an den jeweiligen Einsatzzweck angepasst werden und gegebenenfalls mehr als 20 Gewichtsprozent betragen.

Indikatorprotektoren im Sinne der vorliegenden Erfindnung sind Mittel, welche die Lumineszenzindikatoren vor deren Zerstörung/Inaktivierung durch äussere Einflüsse schützen. Der Schutz der Indikatoren wird bewirkt durch Inaktivierung, Neutralisation und/oder adsorptive Immobiliserung von Verbindungen, welche auf die Indikatoren inaktivierend und/oder zerstörend, insbesondere oxidierend, wirken.

Als Indikatorprotektor(en) geeignet sind Reaktionspartner einer oder mehrerer Verbindungen/Substanzen, welche bei Kontakt mit den Indikatoren auf diese zerstörend/inaktivierend wirken. Die Reaktionspartner reagieren mit den zerstörend/inaktivierend wirkenden Verbindungen/Substanzen z.B. in einer chemischen Reaktion zu mindestens einem für die Indikatoren unschädlichen Produkt. Der Begriff "Indikatorprotektor(en)" ist in diesem Zusammenhang nicht auf Reaktionspartner beschränkt, die bei der Reaktion mit der Indikator-zerstörenden/inaktivierenden Verbindung/Substanz zu mindestens einer für den Indikator nicht oder weniger zerstörenden/inaktivierenden neuen Verbindung umgesetzt werden. Unter den Begriff "Indikatorprotektor(en)" sind auch Mittel mit katalytischer Wirkung (Katalysatoren) zu subsummieren, welche die Umsetzung der Indikator- zerstörenden/inaktivierenden Verbindung/Substanz zu mindestens einer für den Indikator nicht oder weniger zerstörenden/inaktivierenden neuen Verbindung katalysieren. In diesem Zusammenhang umfasst der Begriff "Katalysator" bzw. "Mittel zur katalytischen Umsetzung" neben einer rein katalytischen Wirkungsweise auch Verbindungen, die neben besagter katalytischer Wirkung auch eine einfache chemische Reaktionsfähigkeit im Sinne eines Reaktionspartners, welcher bei der Reaktion selbst umgesetzt wird, aufweisen.

Als Indikatorprotektor(en) weiterhin geeignet sind Adsorbentien einer oder mehrerer Verbindungen/Substanzen, welche bei Kontakt mit den Indikatoren auf diese zerstörend/inaktivierend wirken. Adsorbentien inhibieren die Diffusion der Indikator-zerstörenden/inaktivierenden Verbindung/Substanz in Richtung der Indikatoren ganz oder teilweise.

Als Indikatorprotektoren eignen sich insbesondere auch Kombinationen der vorstehend genannten Reaktionspartner, Katalysatoren und/oder Adsorbentien. Es ist auch möglich, dass als Indikatorprotektoren eingesetzte Mittel sowohl als Reaktionspartner, Katalysator und/oder Adsorbens wirken.

Ein zur Bestimmung von molekularem Sauerstoff geeignetes erfindungsgemäßes Sensorelement und/oder ein erfindungsgemäßes Sensorelement, welches oxidationsempfindliche Indikatoren umfasst, enthält bevorzugt Indikatorprotektoren, die ausgewählt sind aus
a) Reaktionspartnern, insbesondere Reduktionsmitteln, und/oder Katalysatoren, die jeweils eine Reduktion starker Oxidationsmittel bewirken,
b) Adsorbentien, die eine Chemie- und/oder Physisorption starker Oxidationsmittel bewirken,
c) einer Kombination aus (a) und (b).

Unter starken Oxidationsmitteln sind Verbindungen/Substanzen zu verstehen, die in der Lage sind, Kohlenstoff-Kohlenstoff-Einfachbindungen und/oder Kohlenstoff-Wasserstoff-Bindungen zu spalten, und/oder hinsichtlich ihrer Elektronendonator- und Elektronenakzeptoreigenschaften vergleichbar sind mit: Chlor, Ozon, Superoxiden, Hydroxylradikalen und/oder Peroxidradikalen.

Ein zur Bestimmung von molekularem Sauerstoff bestimmtes erfindungsgemäßes Sensorelement und/oder ein erfindungsgemäßes Sensorelement, welches oxidationsempfindliche Indikatoren umfasst, enthält besonders bevorzugt Indikatorprotektoren, die ausgewählt sind aus
a) Reaktionspartnern, insbesondere Reduktionsmitteln, und/oder Katalysatoren für die Reduktion von Halogenen, insbesondere Chlor, Ozon, Hydroxylradikalen, Peroxidradikalen und/oder Superoxiden,
b) Adsorbentien für eine Chemie- und/oder Physisorption von Halogenen, insbesondere Chlor, Ozon, Hydroxylradikalen, Peroxidradikalen und/oder Superoxiden,
c) einer Kombination aus a) und b).

Als Indikatorprotektoren, die zu Reduktion starker Oxidationsmittel geeignet sind, können im erfindungsgemäßen Sensorelement redox-aktive Polymere eingesetzt werden, welche oxidierbare funktionelle Gruppen enthalten, die mit starken Oxidationsmitteln reagieren können, unter normalen Bedingungen aber, z.B. an Luft, stabil sind. Diese Polymere können als Schichten, Partikel oder als Bestandteile von Copolymeren in der bzw. den Indikatorprotektoren-tragenden Schicht(en) inkorporiert sein. Diese Polymere können zudem sowohl als Matrixmaterial als auch als Indikatorprotektor agieren. Bei einem chemischen Angriff durch starke Oxidationsmittel werden die funktionellen Gruppen dieser Polymere oxidiert und verhindern oder verringern dadurch den oxidativen Angriff auf die Indikatoren, da wenigstens ein Teil der Oxidationsmittel die Indikatormoleküle nicht mehr erreicht.

In einer speziellen Ausführungsform der Erfindung bestehen die Indikatorprotektoren-tragenden Schicht(en) aus einem oder mehreren redox-aktiven Polymer(en), enthaltend oxidierbare funktionelle Gruppen, optional weiterhin enthaltend Lichtschutzmittel wie hierin definiert.

Als Indikatorprotektoren mit redox-katalytischer und/oder adsorptiver Wirkung können im erfindungsgemäßen Sensorelement Mittel umfassend Aktivkohle, Zeolithe, Metalloxid und/oder Halbleiteroxid umfassende Materialien eingesetzt werden. Diese Indikatorprotektoren können ganz oder teilweise mit Edelmetall, z.B. Platin und/oder Palladium, beladen sein. Derartige Mittel sind einem Fachmann bekannt. Sie sind in der Lage starke Oxidationsmittel wie z.B. Chlor, Ozon und Sauerstoffradikale ggf. mit Hilfe von Wasser als Reduktionsmittel zu reduzieren und/oder deren Diffusion adsorbtiv zu verlangsamen: In diesem Fall werden für die Indikatoren-tragende Schicht(en) vorteilhaft polymere Matrixmaterialen gewählt, die die Anwesenheit von Wasser in der unmittelbaren Nähe des Katalysators als Reaktionspartner in ausreichender, aber geringer Menge zulassen und dies aus der Umgebung aufnehmen.

Die Indikatorprotektoren sind vorteilhaft derart ausgewählt, dass sie den bzw. die Analyten nicht adsorbieren und/oder nicht inaktivieren/neutralisieren. Soll das erfindungsgemäße Sensorelement beispielsweise zur Bestimmung von molekularem Sauerstoff geeignet sein, sind die Indikatorprotektoren derart auszuwählen, dass sie molekularen Sauerstoff nicht adsorbieren und/oder nicht reduzieren.

Bevorzugt liegen die Indikatorprotektoren in der mindestens einen Indikatorprotektoren-tragenden Schicht in Form von Partikeln mit einem Durchmesser von 0,1 bis 200µm, mehr bevorzugt von 0,2 bis 100µm, besonders bevorzugt von 0,5 bis 50µm vor. Je nach Einsatzzweck, Art und Menge der Indikatorprotektoren in der mindestens einen Indikatorprotektoren-tragenden Schicht können die Partikelgrößen von den genannten Angaben abweichen.

Die Korngrößenverteilung der Indikatorprotektorenpartikel in der mindestens einen Indikatorprotektoren-tragenden Schicht liegt vorzugsweise im Bereich von 100µm oder weniger (100%), bevorzugt 50µm oder weniger (100%), besonders bevorzugt 30µm oder weniger (100%).

Um die Indikatoren effektiv vor schädigenden Einflüssen zu schützen, beträgt der Anteil der Indikatorprotektoren an der mindestens einen Indikatorprotektoren-tragenden Schicht wenigstens 2 Gewichtprozent, bevorzugt 2 bis 75 Gewichtsprozent, mehr bevorzugt 20 bis 50 Gewichtsprozent. Je nach Einsatzzweck und Art der Indikatorprotektoren können die Anteile der Indikatorprotektoren an der mindestens einen Indikatorprotektoren-tragenden Schicht von den genannten Angaben abweichen. Bei Verwendung von Aktivkohle als Indikatorprotektor kann dessen Anteil an der Indikatorprotektoren-tragenden Schicht geeigneterweise bis zu 80 Gewichtsprozent, bevorzugt bis zu 50 Gewichtsprozent betragen.

Indikatorprotektoren umfassend Aktivkohle sind insbesondere zum Schutz der hierin genannten Photolumineszenzindikatoren vor starken Oxidationsmitteln geeignet. Aktivkohle mit einem BET Wert von mindestens 1000 m2/g und/oder einer lodzahl von 1000 mg/g sind besonders bevorzugt. Aktivkohle bietet den Vorteil, dass es neben der redox-katalytischen und/oder adsorptiven Wirkung auf die die Indikatoren zerstörenden/inaktivierenden Verbindungen/Substanzen auch einen Schutz vor auf der Medienseite eindringendem Fremdlicht gewährleistet.

Es umfasst das erfindungsgemäße Sensorelement
- Indikatoren ausgewählt aus Photolumineszenzindikatoren wie hierin definiert, insbesondere Ruthenium-, Rhenium-, Rhodium-, Iridium-Lanthanid-komplexe, metallierte Porphyrine (z.B. Platin- und/oder Palladiumporphyrine), unmetallierte Porphyrine oder Mischungen daraus, optional in Kombination mit fluorierten Farbstoffen und/oder Lichtschutzmitteln,
- Indikatorprotektoren ausgewählt aus Aktivkohle wie hierin defniert, optional ganz oder teilweise mit Edelmetall, z.B. Platin und/oder Palladium, beladen.

Werden im erfindungsgemäßen Element Indikatorprotektoren eingesetzt, die bei Verwendung des Elements zur Bestimmung von molekularem Sauerstoff in einem gasförmigen oder in einem flüssigen Medium eine Umsetzung starker Oxidationsmittel bewirken, so kann als Produkt dieser Umsetzung eine gewisse Menge an zusätzlichem Sauerstoff entstehen. Um die Messung des eigentlichen Analyten nicht zu verfälschen, sind erfindungsgemäß die Diffusionsverhältnisse in der Membran durch die Position der Indikatorprotektoren nahe der medienberührenden Oberfläche, deren Menge, sowie durch die Art der für die einzelnen Schichten eingesetzten Polymere sowie deren Dicke, so gestaltet, dass die Diffusion des an den Indikatorprotektoren zusätzlich entstehenden Sauerstoffs zurück in die Lösung wesentlich schneller als zu den Indikatoren erfolgt und der Diffusionsgradient sich innerhalb der Schicht(en) des Elements kaum ändert, da Konzentrationsunterschiede im flüssigen oder gasförmigen Medium aufgrund der dort vorhandenen Konvektion wesentlich schneller ausgeglichen sind, als in der Membranphase. Die geringe Menge an zusätzlich entstehendem Sauerstoff führt bei einem der medienberührenden Oberfläche der Sensorschicht entsprechenden Volumen des Mediums zu keiner messbaren Verfälschung der Messung.

Ein weiterer Gegenstand der vorliegenden Erfindung ist ein Sensor umfassend mindestens ein Sensorelement nach einem der vorhergehenden Ansprüche. Dieser kann weiterhin eine, dem Fachmann bekannte und die Lumineszenzemission der Indikatoren anregende Energiequelle und eine Detektoreinheit und weiterhin eine Auswerteeinheit enthalten.

In einer bevorzugten Ausführungsform ist das vorstehend beschriebene erfindungsgemäße Sensorelement oder ein erfindungsgemäßer Sensor umfassend ein solches Sensorelement für den Nachweis von molekularem Sauerstoff in einem gasförmigen oder flüssigen Medium und/oder zur Bestimmung des molekularen Sauerstoffgehaltes eines gasförmigen oder flüssigen Mediums geeignet und dadurch gekennzeichnet, dass die mindestens eine Indikatorprotektoren-tragende Schicht des Sensorelements derart ausgestaltet ist, dass die Diffusionsgeschwindigkeit des an den Indikatorprotektoren durch die Reduktion starker Oxidationsmittel gebildeten molekularen Sauerstoffs zurück in das Medium größer ist als die Diffusionsgeschwindigkeit von molekularem Sauerstoff aus dem Medium in Richtung der mindestens einen Indikatormolekül-tragenden Schicht.

Das bzw. der erfindungsgemäße Sensorelement bzw. Sensor kann zur quantitativen und/oder qualitativen Bestimmung eines oder mehrerer Analyten, bevorzugt zum Nachweis von molekularem Sauerstoff in einem gasförmigen oder flüssigen Medium und/oder zur Bestimmung des molekularen Sauerstoffgehaltes eines gasförmigen oder flüssigen Mediums in einem Medium, verwendet werden. Das Medium, bei dem es sich um komplexe Medien wie Abwässer oder auch Körperflüssigkeiten handeln kann, kann dabei Verbindungen enthalten, welche auf die Indikatoren per se inaktivierend und/oder zerstörend wirken. Da die Indikatoren innerhalb des erfindungsgemäßen Sensorelements wirksam vor inaktivierenden und/oder zerstörenden Verbindungen geschützt sind, führt deren Anwesenheit nicht zu einer stark verkürzten Lebensdauer des Sensorelements, wie dies bei den aus dem Stand der Technik bekannten Sensorelementen der Fall ist.

Die vorliegende Erfindung betrifft weiterhin ein Verfahren zur quantitativen und/oder qualitativen Bestimmung eines oder mehrerer Analyten in einem Medium, umfassend das In-Kontaktbringen des Mediums mit einem wie hierin definierten Sensorelement, wobei das In-Kontaktbringen an der medienberührenden Schicht (1) des Sensorelements erfolgt.

Insbesondere betrifft die vorliegende Erfindung ein Verfahren zur quantitativen und/oder qualitativen Bestimmung von molekularem Sauerstoff in einem Medium, welches Verbindungen enthalten kann, welche auf die Indikatoren per se inaktivierend und/oder zerstörend, insbesondere oxidierend, wirken, wie z.B. Halogene, insbesondere Chlor, Ozon, Hydroxylradikale, Peroxidradikale und/oder Superoxide. Derartige starke Oxidationsmittel kommen in teils hoher Konzentration in Abwässern oder Schwimmbädern zur Desinfektion zum Einsatz. Das zu analysierende Medium kann auch eine Körperflüssigkeit sein. So kann das erfindungsgemäße Element in einem in vitro Verfahren zur Bestimmung des Sauerstoffgehaltes im Blut verwendet werden.

Das erfindungsgemäße Verfahren umfasst bevorzugt weiterhin den Nachweis der oder des Analyten durch Messung der Intensität und/oder Abklingzeit der Lumineszenzemission der Indikatoren und/oder durch Messung der Lumineszenzlöschung mittels Phasenmodulation.

Die vorstehend beschriebene Erfindung wird nachfolgend am Beispiel eines Sensorelementes zur Verwendung in einem optischen Sauerstoffsensor näher erläutert, ohne sich auf dieses Sensorelement zu beschränken.

So kann die erste, das Medium unmittelbar berührende Seite (1.1) der Schicht (1) des Sensorelements schwarz gefärbt sein, um Licht aus der Umgebung zu absorbieren und dieses nicht in die Indikator-tragenden Schichten durchzulassen. Diese optische Isolation kann durch Inkorporation von z.B. Russ- aber auch Aktivkohlepartikeln wie vorstehend beschrieben realisiert werden.

Auf die der medienberührenden Seite (1.1) gegenüberliegende Seite (1.2) der Schicht (1) ist mindestens eine, bevorzugt eine, zwei oder drei Indikatoren-tragende Schichten (2) aufgebracht. Die Indikatoren sind Photolumineszenzindikatoren, die Sauerstoff-empfindlich sind, d.h. deren Lumineszenzemission bei Kontakt mit molekularem Sauerstoff selektiv gelöscht wird, bevorzugt Ruthenium-, Rhenium-, Rhodium-, Iridium-, Lanthanid-komplexe, metallierte Porphyrine (z.B. Platin- und/oder Palladiumporphyrine), unmetallierte Porphyrine oder Mischungen daraus, optional in Kombination mit fluorierten Farbstoffen und/oder Lichtschutzmitteln. Die mindestens eine Indikator-tragende Schicht (2) kann weiterhin Indikatorprotektoren umfassen.

Optional kann zwischen der Schicht (1) und der Schicht (2) mindestens eine weitere Schicht angeordnet sein, welche die Indikatorprotektoren umfasst und bevorzugt frei oder im Wesentlichen frei von den Indikatoren ist. Weiterhin kann die mindestens eine weitere Schicht (2) selbst lichtreflektierend sein oder voneinander durch mindestens eine lichtreflektierende Schicht (LRS), die keine Indikatorprotektoren-tragende Schicht und keine Indikatoren-tragende Schicht ist, separiert sein, so dass mehr vom angeregten Lumineszenzlicht auf den Photodetektor reflektiert wird, was zu einer Erhöhung der Lumineszenzausbeute führt.

An der dem Medium abgewandten Seite der Indikatoren-tragenden Schicht bzw. bei mehreren Indikatoren-tragenden Schichten, der äußersten, dem Medium gegenüberliegenden, Indikatoren-tragenden Schicht (2) ist ein transparentes Substrat angeordnet, das aus Anregungs- und Emissionslicht durchlässigem Glas oder Kunststoff bestehen kann. Daran anschließend ist ein optisches System angeordnet, umfassend eine Anregungslichtquelle z.B. eine Licht emittierende Diode (LED), ein Photodetektor, üblicherweise bestehend aus Photodioden, entsprechenden optischen Filtern und einer Auswerteelektronik. Das Anregungs- und Emissionslicht kann auch über Lichtleiter übertragen werden.

Verschiedene Messmethoden können angewandt werden, um die Lumineszenzlöschung durch Sauerstoff zu detektieren. Dies kann über Intensitätsmessungen, die Messung der Lumineszenzabklingzeit oder die sogenannte Phasenmodulationstechnik erfolgen. Das auf der Phasenmodulationstechnik beruhende sensorische Prinzip besteht darin, dass die Lumineszenz der Indikatoren mit einer bestimmten, auf dessen Abklingzeit abgestimmten Frequenz in der Intensität modulierten Anregungslicht der Wellenlänge v₁ angeregt wird. Durch die Modulation des Anregungslichtes ist das resultierende Lumineszenzlicht des Indikators mit der Wellenlänge v₂ ebenfalls moduliert. Aus den Modulationen des Anregungs- und des Lumineszenzlichtes lässt sich eine Phasenverschiebung berechnen, die auf der mittleren Lumineszlebenszeit der angeregten Zustände der Indikatormoleküle basiert. Der durch die Schicht(en) aus dem zu vermessenden Medium zu den Indikatoren diffundierende Sauerstoff beeinflusst die Lebenszeit ihrer Anregungszustände in der Weise, dass Energie von den angeregten Indikatoren auf den Sauerstoff strahlungslos übertragen wird. Entsprechend dem Verhältnis von Sauerstoff und angeregten Indikatoren in der Membran sinkt die mittlere Lebenszeit und der ermittelte Phasenwinkel wird mit zunehmender Sauerstoffmenge kleiner. Die Phasenmodulationstechnik hat den Vorteil, dass der gemessene Phasenwinkel nicht von der Signalintensität abhängt, soweit die Lumineszenzintensitäten ausreichend gross für eine einwandfreie Messung mit dem optischen System ist. Mit entsprechender Kalibrierung ist es möglich, aus dem bestimmten Phasenwinkel den Partialdruck des im untersuchten Medium gelösten Sauerstoffs über den mit der sogenannten Stern-Volmer Gleichung beschriebenen Zusammenhang zu ermitteln. Der Partialdruck von Sauerstoff kann dann in andere physikalische Einheiten umgerechnet werden.

Verantwortlich für die photoinduzierte Zerstörung des Indikators ist im Wesentlichen reaktiver Singulett-Sauerstoff, der beim strahlungslosen Transfer der Energie vom Indikator auf das Sauerstoffmolekül entsteht, und den Indikator chemisch angreift. Dem kann durch die Beimischung von Lichtschutzmitteln wie z.B. HALS (hindered amine light stabiliser) in die Indikator-tragende Schicht entgegengewirkt werden, wie z.B. in EP 1757924B1 offenbart. Die Lichtschutzmittel allein können jedoch keinen ausreichenden Schutz z.B. gegen Chlor bieten. So werden z.B. als Indikatoren eingesetzte Porphyrine durch gelöstes Chlorgas letztlich zu Chlorinen und Bakteriochlorinen umgesetzt, was dazu führt, dass nicht nur die Intensität des Lumineszenzlichtes zunehmend mit der Exposition sinkt, sondern dass das Lumineszenzlicht durch bei der Zerstörung des Indikators entstehende Reaktionsprodukte überlagert und/oder absorbiert wird und der obenbeschriebene Zusammenhang zwischen Phasenwinkel und Sauerstoffpartialdruck seine Gültigkeit verliert. Dies ist besonders nachteilig, da die oben genannten Oxidationsmittel aufgrund ihres Oxidationspotentials zu Desinfektionszwecken in der Wasseraufbereitung, die auch jeglichen Prozessen in der pharmazeutischen Biotechnologie oder der Lebensmittelherstellung vorgeschaltet sind, eingesetzt werden. Das Sensorelement kann z.B. bei Reinigungs- und Desinfektionsvorgängen erhöhten Konzentrationen derartiger Oxidationsmittel ausgesetzt sein und ohne einen Schutz der Indikatoren vor diesen Oxidationsmitteln seine Sensibilität verlieren. Desweiteren können auch bestimmte Reaktionen z.B. in biotechnologischen Prozessen, die mit Hilfe eines Sauerstoffsensors überwacht werden sollen, starke Oxidationsmittel entstehen lassen. Eine derartige Reaktion ist z.B. die bei Stoffwechselprozessen im Zuge der Reduktion von molekularem Sauerstoff in der Atmungskette entstehende Bildung von Superoxid.

Durch den Schutz der Indikatoren im erfindungsgemäßen Sensorelement lässt sich dessen Lebensdauer bei Anwesenheit stark oxidativer Spezies in zumindest teilweise wässrigen Messmedien deutlich verlängern. Der Schutz wird dabei bewirkt durch die in der mindestens einen Indikatorprotektoren-tragenden Schicht lokalisierten Indikatorprotektoren, welche eine Reduktion und/oder eine adsorptive Immobilisierung der oxidativen Spezies ganz oder zumindest teilweise bewirken und somit den Angriff dieser Spezies auf die Indikatoren verhindern oder mindern.

Beim vorliegenden Beispiel werden als Indikatorprotektoren Katalysatorpartikel aus Aktivkohle oder Zeolithen, Metall- oder Halbleiteroxiden, mit oder ohne Edelmetallenbeladung von beispielsweise Pt oder/und Pd, oder anderen z.B. glasartigen Trägermaterialien verwendet. Die immobilisierte Katalysatormenge beträgt, um eine stabilisierende Wirkung gegenüber oxidativen Angriffen zu erreichen, bezogen auf die Masse der katalysatortragenden Schicht wenigstens 10 Gewichtsprozent. Der durchschnittliche Durchmesser der Katalysatorpartikel liegt im Submillimeterbereich, vorzugsweise im Bereich von 0.5 - 50 µm.

### Abbildungen

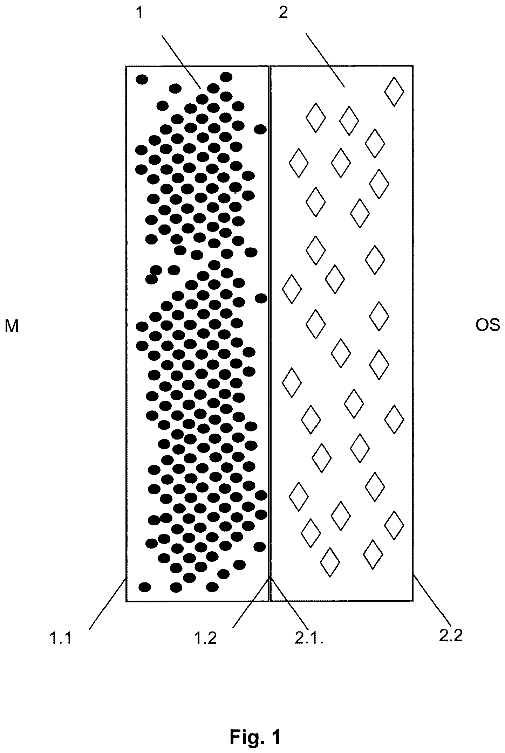

Abbildung 1 zeigt einen zweischichtigen Aufbau des erfindungsgemäßen Sensorelements, umfassend eine Indikatorprotektoren (•)-tragende Schicht (1) und eine Indikatoren (◊)-tragende Schicht (2). Die Schicht (1) berührt das Medium (M), die Schicht (2) ist mit dem optischen System (OS) gekoppelt.

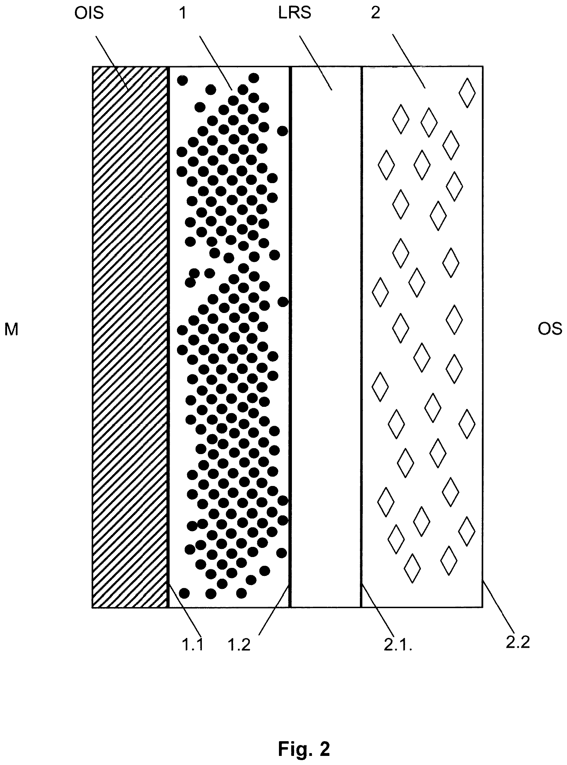

Abbildung 2 zeigt einen vierschichtigen Aufbau des erfindungsgemäßen Sensorelements, umfassend eine Indikatorprotektoren (•)-tragende Schicht (1) und eine Indikatoren (◊)-tragende Schicht (2). Die Schicht (2) ist mit dem optischen System (OS) gekoppelt. Zwischen den Schichten (1) und (2) befindet sich eine lichtreflektierende Schicht (LRS). Auf die Seite (1.1) der Schicht (1) ist eine optische Isolationsschicht (OIS) aufgebracht, die das Medium (M) berührt.
Abbildung 3 zeigt die Änderungen der Phasenwinkel zwischen einem erfindungsgemäßen Sensorelement und einem aus dem Stand der Technik bekannten Sensorelement, jeweils nach Chlor-Exposition in einer chlor- und sauerstofffreien Umgebung.
Abbildung 4 zeigt die Änderungen der Phasenwinkel zwischen einem erfindungsgemäßen Sensorelement und einem aus dem Stand der Technik bekannten Sensorelement, jeweils nach einer Ozon-Exposition.

### Ausführungsbeispiele

### Beispiel 1

In der äußeren Schicht einer dreilagigen Silikon-Membran für einen Sauerstoffsensor, wurden bezogen auf die Masse der medienberührenden Schicht 20 Gewichtsprozent Aktivkohlepartikel mit einem Durchmesser von 10-50 µm immobilisiert. Dazu wurde wie folgt verfahren:

Das Präpolymer für die erste Membranschicht wurde eingewogen und mit einer bestimmten Menge eines Lösungsmittels verrührt. Anschliessend wurden der Mischung die Aktivkohlepartikel zugegeben und gesamte Masse vermengt. Danach wurde die Polymermischung auf eine glatte Oberfläche gegeben und eine ca. 150 µm dicke Schicht erzeugt. Nachdem das Lösungsmittel verdampft war, war die Schicht bereit, um weitere Schichten darauf aufzubauen. Die weiteren Schichten wurden nach dem Fachmann bekannten Methoden hergestellt. Ein kleiner Zirkel der so gefertigten Sensormembran wurde auf die Glasoberfläche einer Visiferm - Sensorkappe geklebt, sodass die sensorische Schicht der hergestellten Membrane der Anregungslichtquelle des Sensors zugewandt ist. Um die Wirkung der Erfindung zu testen, wurde die Stabilität der wie beschrieben hergestellten Sensormembran gegenüber einem Angriff von gelöstem Chlor mit der einer herkömmlichen Membran, wie sie derzeit von der Anmelderin für den optischen Sensor "Visiferm" vertrieben wird, verglichen.

Wie oben beschrieben, spiegelt sich die Zerstörung des Lumineszenzindikators deutlich in der Änderung des Zusammenhangs zwischen gemessenem Phasenwinkel und Sauerstoffpartialdruck. Dies gilt in besonderem Masse auch für den Phasenwinkel, der in einer sauerstofffreien Sensorumgebung gemessen wird, da die Lumineszenzlöschung nur bei Anwesenheit von Sauerstoff stattfindet. Der dort bestimmte Phasenwinkel eignet sich daher besonders, um eine relevante Änderung der sensorischen Eigenschaften zu detektieren und die Stabilität der Sensormembran zu prüfen. Zum Vergleich wurden zwei baugleiche Sensoren benutzt, wobei ein Sensor mit einer herkömmlichen Membran und der andere mit der erfindungsgemässen Membran ausgestattet waren. Beide Sensoren wurden an ein Datenerfassungssystem zur Protokollierung des gemessenen Phasenwinkels angeschlossen und zeitgleich in einen mit 0.1M Salzsäure gefüllten Reaktionsbehälter eingebaut. Um die Ausgangssituation zu erfassen, wurde zuerst das Medium im Reaktionsgefäss mit Stickstoff gespült, um gelösten den Sauerstoff aus dem Medium zu entfernen. Die entsprechenden Phasenwinkel wurden mit beiden Sensoren gemessen. Danach wurde der Salzsäure unter ständigem Rühren mittels eines Dossierapparats kontinuierlich eine gleichmässige 0.1%ige Natriumhypochlorit-Lösung zugegeben, sodass beide Sensoren einer gleichen, bestimmten Menge von dabei entstehendem gelöstem Chlor ausgesetzt waren. Nach 15 Minuten wurde die Natriumhypochloritzufuhr gestoppt und die Lösung erneut mit Stickstoff gespült, um das entstandene Chlor und eventuell neu eingetragenen Sauerstoff aus der Lösung zu vertreiben. Danach wurde der Phasenwinkel erneut erfasst. Die Chlorexposition und Bestickung wurde viermal wiederholt.

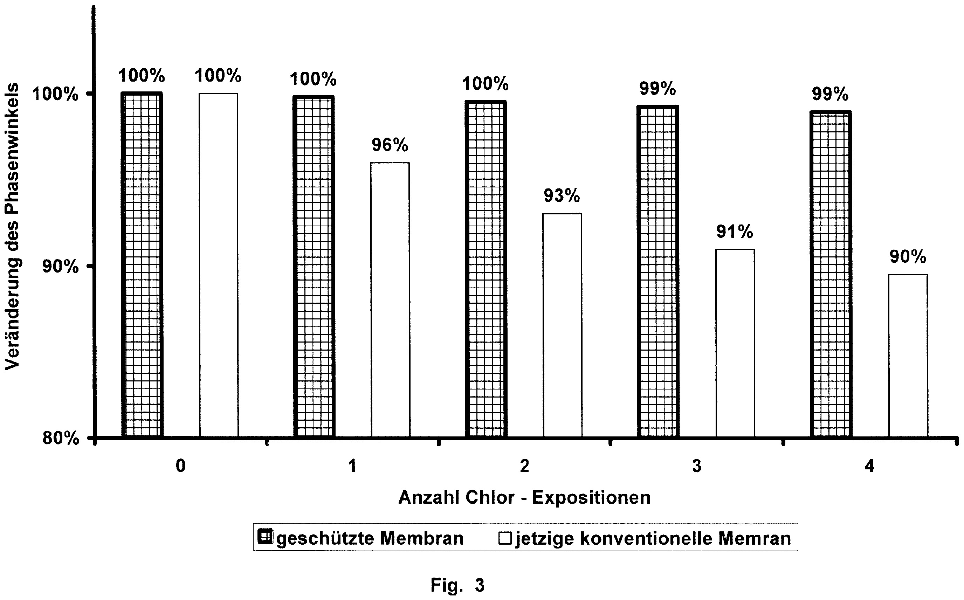

Abbildung 3 zeigt die Änderungen der Phasenwinkel beider Sensoren, jeweils nach einer Chlor-Exposition in einer chlor- und sauerstofffreien Umgebung gemessen, bezogen auf die Ausgangssituation. Bei der herkömmlichen Sensormembran sank der Phasenwinkel gemessen in sauerstofffreier Sensorumgebung nach vier Expositionen auf 90% seines Ausgangswertes, während der Phasenwinkel bei der geschützten Membran fast unverändert blieb. Ab einem Absinken dieses Phasenwinkels um etwa 10% wird die Sensormembran unbrauchbar, da der Stern-Volmer Zusammenhang nicht mehr exakt genug gegeben ist und /oder nicht mehr genau genug ermittelt werden kann. Dies ist nach der vierten Chlor-Exposition bei der herkömmlichen Membran der Fall. Wie der Vergleich augenscheinlich zeigt, ist die erfindungsgemässe Sensormembran erheblich stabiler gegen einen oxidativen Angriff von Chlor und nach vier Angriffen noch voll funktionstüchtig.

### Beispiel 2

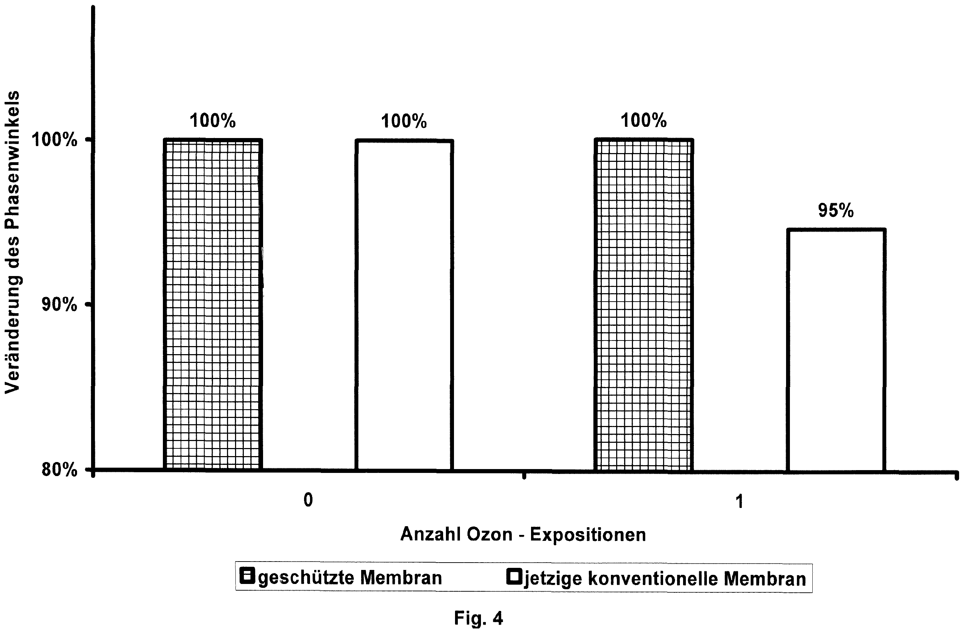

Analog zum Beispiel 1 wurde eine Sensormembran auf ihre Ozonresistenz evaluiert. Die Sensormembran wurde mit 25 Gewichtsprozent Aktivkohle bezogen auf die medienberührende Schicht gefertigt. Um die Wirkung der Erfindung zu testen, wurde die Stabilität der Sensormembran gegenüber einem Angriff von gelöstem Ozon wiederum in ähnlicher Weise wie oben beschrieben mit der einer herkömmlichen Membran verglichen. Dazu wurde reiner Sauerstoff durch einen der Ozonisator geleitet und das Gasgemisch in das mit Wasser gefüllten Reaktionsbehälter, in dem ein Sensor mit herkömmlicher und ein Sensor mit der erfindungsgemässen Membran eingebaut waren, ca. zwei Stunden geleitet. Wie aus Abbildung 4 ersichtlich, sank bei der herkömmlichen Sensormembran der Phasenwinkel in sauerstofffreier Sensorumgebung nach einer Ozon - Exposition auf etwa 95% seines Ausgangswertes, während der Phasenwinkel bei der erfindungsgemäss geschützten Membran unverändert blieb. Wie auch dieser Vergleich zeigt, ist die erfindungsgemässe Sensormembran auch erheblich stabiler gegen einen oxidativen Angriff von Ozon.

Die Erfindung ist besonders dort zur Messung von gelöstem Sauerstoff geeignet, wo stark oxidative Substanzen, wie sie z. B. zur Desinfektion eingesetzt werden, im Messmedium vorhanden sind, welche die herkömmlichen Membranen schnell ganz oder teilweise zerstören.

## Patentansprüche

1. Optisches Sensorelement umfassend
(a) Indikatoren, ausgewählt aus gleichartigen oder verschiedenen Lumineszenz-aktiven Mitteln, und
(b) Indikatorprotektoren,
wobei das Element mehrschichtig, wenigstens zweischichtig ist,
wobei die Indikatoren und die Indikatorprotektoren in verschiedenen Schichten des mehrschichtigen, wenigstens zweischichtigen Elements angeordnet sind und das Element mindestens eine Indikatoren-tragende Schicht (2), in der primär die Indikatoren vorliegen, und mindestens eine Indikatorprotektoren-tragende Schicht (1), in der primär die Indikatorprotektoren vorliegen, umfasst, worin die mindestens zwei Schichten (1, 2) des Elements jeweils ein Matrixmaterial, ausgewählt aus einem Polymer oder Polymergemisch, umfassen,
die Indikatoren ausgewählt sind aus Lumineszenzmitteln, deren Lumineszenzemission bei Kontakt mit mindestens einem Analyten, ausgewählt aus Sauerstoff, insbesondere molekularem Sauerstoff, Kohlenmonoxid, Kohlendioxid, Halogenidionen, Schwermetallionen, Hydroxylionen und Hydroniumionen, selektiv gelöscht wird und das Lumineszenzmittel bevorzugt ausgewählt ist aus Ruthenium-, Rhenium-, Rhodium-, Iridium-Lanthanid-komplexen, metallierten Porphyrinen, unmetallierten Porphyrinen oder Mischungen daraus, optional in Kombination mit fluorierten Farbstoffen und/oder Lichtschutzmitteln,
die Indikatorprotektoren Reduktionsmittel sind, ausgewählt aus redox-aktiven Polymeren enthaltend eine oder mehrere oxidierbare funktionelle Gruppen, und/oder
die Indikatorprotektoren eine redox-katalytische und/oder adsorptive Wirkung aufweisen und ausgewählt sind aus einem Aktivkohle, Zeolith, und/oder Halbleiteroxid umfassenden Material, welches optional mit Edelmetall beladen ist.

2. Optisches Sensorelement nach Anspruch 1, **dadurch gekennzeichnet, dass** die mindestens eine Indikatorprotektoren-tragende Schicht (1) frei oder im Wesentlichen frei von Indikatoren ist.

3. Optisches Sensorelement nach einem der vorhergehenden Ansprüche, **dadurch gekennzeichnet, dass** die Indikatorprotektoren in einer das Medium berührenden Schicht (1) und/oder in mindestens einer dem Medium zugewandten und auf die medienberührende Schicht (1) aufgebrachten Schicht des Elements angeordnet sind und die Indikatoren in mindestens einer Schicht (2), welche auf die dem Medium abgewandte Seite der Indikatorprotektoren-tragende(n) Schicht(en) (1) aufgebracht ist, angeordnet sind.

4. Optisches Sensorelement nach einem der vorhergehenden Ansprüche, **dadurch gekennzeichnet, dass** die medienberührende Schicht (1) lichtundurchlässig ist und/oder die mindestens eine weitere Schicht (2) lichtreflektierend ist.

5. Optisches Sensorelement nach einem der vorhergehenden Ansprüche, **dadurch gekennzeichnet, dass** das Element umfasst
(i) eine medienberührende, optional lichtundurchlässige Schicht (1), welche frei oder im Wesentlichen frei von Indikatoren ist und optional Indikatorprotektoren enthält,
(ii) eine zweite Schicht, welche
(iia) auf die dem Medium abgewandte Seite der ersten Schicht (1) aufgebracht ist,
(iib) die Indikatorprotektoren enthält,
(iic) frei oder im Wesentlichen frei von Indikatoren ist und
(iid) optional lichtreflektierend ist,
(iii) eine dritte Schicht (2), welche
(iiia) auf die dem Medium abgewandte Seite der zweiten Schicht aufgebracht ist,
(iiib) die Indikatoren enthält,
(iiic) frei oder im Wesentlichen frei von Indikatorprotektoren ist und
(iiid) optional lichtreflektierend ist.

6. Optisches Sensorelement nach einem der vorhergehenden Ansprüche, **dadurch gekennzeichnet, dass** die Indikatorprotektoren-tragende(n) Schicht(en) (1) von der/den Indikatoren-tragenden Schicht(en) (2) durch mindestens eine lichtreflektierende Schicht (LRS) separiert ist bzw. sind.

7. Optisches Sensorelement nach einem der vorherigen Ansprüche, **dadurch gekennzeichnet, dass** die Indikatorprotektoren in der mindestens einen Indikatorprotektoren-tragenden Schicht (1) in Form von Partikeln mit einem Durchmesser von 0,1µm bis 200µm, oder 0,2µm bis 100µm oder 0,5µm bis 50µm vorliegen.

8. Optisches Sensorelement nach einem der vorherigen Ansprüche, **dadurch gekennzeichnet, dass** der Anteil der Indikatorprotektoren an der mindestens einen Indikatorprotektoren-tragenden Schicht (1) wenigstens 2 Gewichtprozent oder 2 bis 75 Gewichtsprozent oder 20 bis 50 Gewichtsprozent beträgt.

9. Optisches Sensorelement nach einem der vorhergehenden Ansprüche, **dadurch gekennzeichnet, dass** die mindestens zwei Schichten (1,2) des Elements hinsichtlich Schichtdicke und/oder Zusammensetzung ihres Matrixmaterials verschieden sind.

10. Optisches Sensorelement nach einem der vorhergehenden Ansprüche, **dadurch gekennzeichnet, dass** die mindestens zwei Schichten (1,2) hinsichtlich Art, Konzentration und/oder Vernetzungsgrad der Polymergrundbausteine verschieden sind.

11. Optisches Sensorelement nach einem der vorhergehenden Ansprüche, **dadurch gekennzeichnet, dass** das Matrixmaterial ausgewählt ist aus Polystyrol, Polyvinylchlorid, Polyalkylmethacrylat, insbesondere Polymethylmethacrylat, Polyisobutylmethacrylat und Poly-2-hydroxyethylmethacrylat, Poly-α-methylstyrol, Kieselgelen, Sol-Gelen, Hydrogelen, Polyurethanen, Polytetrahydrofuranen, Polytetrafluorethylen, Polyester, Polybutadien, Polyvinylbutyral, Polyethylacrylat, Ethylcellulose, Cellulosetriacetat, Cellulose-acetyl-butyrat, Polysulfonen, Polysulfiden, Silikonen, fluorierten Silikonen und Kombinationen daraus, optional in Kombination mit Weichmachern.

12. Sensor umfassend mindestens ein Sensorelement nach einem der vorhergehenden Ansprüche und optional eine, die Lumineszenzemission der Indikatoren anregende Energiequelle und eine Detektoreinheit, und optional weiterhin umfassend eine Auswerteeinheit.

13. Sensorelement oder Sensor nach einem der vorherigen Ansprüche zum Nachweis von molekularem Sauerstoff in einem gasförmigen oder flüssigen Medium und/oder zur Bestimmung des molekularen Sauerstoffgehaltes eines gasförmigen oder flüssigen Mediums, **dadurch gekennzeichnet, dass** die mindestens eine Indikatorprotektoren-tragende Schicht (1) des Sensorelements derart ausgestaltet ist, dass die Diffusionsgeschwindigkeit des an den Indikatorprotektoren durch die Reduktion starker Oxidationsmittel gebildeten molekularen Sauerstoffs zurück in das Medium größer ist als die Diffusionsgeschwindigkeit von molekularem Sauerstoff aus dem Medium in Richtung der mindestens einen Indikatormolekül-tragenden Schicht (2).

14. Verwendung eines Sensorelements oder eines Sensors nach einem der vorherigen Ansprüche zur quantitativen und/oder qualitativen Bestimmung eines oder mehrerer Analyten in einem Medium, insbesondere zum Nachweis von molekularem Sauerstoff in einem gasförmigen oder flüssigen Medium und/oder zur Bestimmung des molekularen Sauerstoffgehaltes eines gasförmigen oder flüssigen Mediums.

15. Verfahren zur quantitativen und/oder qualitativen Bestimmung eines oder mehrerer Analyten in einem Medium, umfassend das In-Kontaktbringen des Mediums mit einem wie in einem der Ansprüche 1 bis 11 definierten Sensorelement, wobei das In-Kontaktbringen an der medienberührenden Schicht (1) des Sensorelements erfolgt, wobei der Analyt bevorzugt molekularer Sauerstoff ist und wobei das Verfahren optional weiterhin den Nachweis der oder des Analyten durch Messung der Intensität und/oder Abklingzeit der Lumineszenzemission der Indikatoren und/oder durch Messung der Lumineszenzlöschung mittels Phasenmodulation umfasst.

## Claims

1. Optical sensor element comprising
(a) indicators selected from similar or different luminescence active agents; and
(b) indicator protectors,
wherein
the element is multi-layered, at least two-layered,
wherein the indicators and indicator protectors are arranged in different layers of the multi-layered, at least two-layered element and the element comprises at least one at least one indicator-bearing layer (2) in which the indicator proteins are primarily present,
wherein the at least two layers (1, 2) of the element each comprise a matrix material selected from a polymer or polymer blend,
the indicators are selected from luminescent agents whose luminescent emission is extinct on contact with at least one analyte selected from oxygen, in particular molecular oxygen, carbon monoxide, carbon dioxide, halide ions, heavy metal ions, hydroxyl ions and hydronium ions, and the luminescent agent is preferably selected from ruthenium, rhenium, rhodium, iridium-lanthanide complexes, metallized porphyrins, non-metallized porphyrins or mixtures thereof, optionally in combination with fluorinated dyes and/or light stabilizers,
the indicator protectors are reducing agents selected from redox-active polymers containing one or more oxidizable functional groups, and/or
the indicator protectors have a redox catalytic and/or adsorptive effect and are selected from a material comprising activated carbon, zeolite and/or semiconductor oxide which is optionally loaded with noble metal.

2. Optical sensor element according to claim 1, **characterized in that** the at least one indicator protector-bearing layer (1) is free or substantially free of indicators.

3. Optical sensor element according to one of the preceding claims, **characterized in that** the indicator protectors are arranged in a layer (1) which contacts the medium and/or in at least one layer of the element which faces the medium and is applied to the layer (1) which contacts the medium, and the indicators are arranged in at least one layer (2) which is applied to the side of the layer(s) (1) carrying the indicator protector which faces away from the medium.

4. Optical sensor element according to one of the preceding claims, **characterized in that** the layer (1) contacting the medium is opaque and/or the at least one further layer (2) is light-reflecting.

5. Optical sensor element according to one of the preceding claims, **characterized in that** the element comprises
(i) a media-contacting, optionally opaque layer (1) which is free or substantially free of indicators and optionally contains indicator protectors,
(ii) a second layer which
(iia) is applied to the side of the first layer (1) facing away from the medium,
(iib) which includes indicator protectors,
(iic) is free or substantially free of indicators and
(iid) is optionally light reflecting,
(iii) a third layer (2) which is
(iiia) applied to the side of the second layer remote from the medium,
(iiib) contains the indicators,
(iiic) is free or substantially free of indicator protectors; and
(iiid) is optionally light reflecting.

6. Optical sensor element according to one of the preceding claims, **characterized in that** the indicator protector-bearing layer(s) (1) is/are separated from the indicator-bearing layer(s) (2) by at least one light-reflecting layer (LRS).

7. Optical sensor element according to one of the previous claims, **characterized in that** the indicator protectors are present in the at least one indicator protector-bearing layer (1) in the form of particles with a diameter of 0.1µm to 200µm, or 0.2µm to 100µm or 0.5µm to 50µm.

8. Optical sensor element according to one of the previous claims, **characterized in that** the proportion of indicator protectors in the at least one indicator protector-bearing layer (1) is at least 2 weight percent or 2 to 75 weight percent or 20 to 50 weight percent.

9. Optical sensor element according to one of the preceding claims, **characterized in that** the at least two layers (1, 2) of the element are different in terms of layer thickness and/or composition of their matrix material.

10. Optical sensor element according to one of the preceding claims, **characterized in that** the at least two layers (1, 2) are different with respect to type, concentration and/or degree of crosslinking of the basic polymer building components.

11. Optical sensor element according to one of the preceding claims, **characterized in that** the matrix material is selected from polystyrene, polyvinyl chloride, polyalkyl methacrylate, in particular polymethyl methacrylate, polyisobutyl methacrylate and poly-2-hydroxyethyl methacrylate, poly-α-methyl styrene, silica gels, sol gels, hydrogels, polyurethanes, polytetrahydrofurans, polytetrafluoroethylene, polyesters, polybutadiene, polyvinylbutyral, polyethylacrylate, ethylcellulose, cellulose triacetate, cellulose acetyl butyrate, polysulfones, polysulfides, silicones, fluorinated silicones and combinations thereof, optionally in combination with plasticizers.

12. A sensor comprising at least one sensor element according to one of the preceding claims and optionally an energy source which stimulates the luminescence emission of the indicators and a detector unit, and optionally further comprising an evaluation unit.

13. Sensor element or sensor according to one of the previous claims for the detection of molecular oxygen in a gaseous or liquid medium and/or for determining the molecular oxygen content of a gaseous or liquid medium, **characterized in that** the at least one indicator protector-bearing layer (1) of the sensor element is designed in such a manner, **in that** the diffusion rate of the molecular oxygen formed at the indicator protectors by the reduction of strong oxidizing agents back into the medium is greater than the diffusion rate of molecular oxygen from the medium in the direction of the at least one indicator molecule-bearing layer (2).

14. Use of a sensor element or a sensor according to one of the previous claims for the quantitative and/or qualitative determination of one or more analytes in a medium, in particular for the detection of molecular oxygen in a gaseous or liquid medium and/or for determining the molecular oxygen content of a gaseous or liquid medium.

15. A method for the quantitative and/or qualitative determination of one or more analytes in a medium, comprising contacting the medium with a sensor element as defined in one of claims 1 to 11, wherein the contacting takes place at the medium contacting layer (1) of the sensor element, wherein the analyte is preferably molecular oxygen and wherein the method optionally further comprises detecting the analyte or analytes by measuring the intensity and/or decay time of the luminescence emission of the indicators and/or by measuring the luminescence quenching by means of phase modulation.

## Revendications

1. Elément capteur optique comprenant
a) des indicateurs choisis parmi des agents luminescents actifs similaires ou différents; et
b) les protecteurs d'indicateurs,
dans laquelle
l'élément est multicouche, au moins deux couche,
dans lequel les indicateurs et les protecteurs d'indicateurs sont disposés en différentes couches de l'élément multicouche à au moins deux couches et l'élément comprend au moins une au moins une couche porteuse d'indicateurs (2) dans laquelle les protéines indicatrices sont principalement présentes, dans laquelle les au moins deux couches (1, 2) de l'élément comprennent chacune un matériau de matrice choisi parmi un polymère ou un mélange de polymères,
les indicateurs sont choisis parmi des agents luminescents dont l'émission luminescente s'éteint au contact d'au moins un analyte choisi parmi l'oxygène, en particulier l'oxygène moléculaire, le monoxyde de carbone, le dioxyde de carbone, les ions halogénures, les ions métaux lourds, les ions hydroxy et les ions hydronium, et l'agent luminescent est choisi de préférence parmi les complexes ruthénium, rhénium, rhodium, iridium-lanthanure, porphyrines métallisées, porphyrines non-métalliques ou leurs mélanges, éventuellement combinés avec des colorants fluorés et/ou stabilisateurs lumineux,
les protecteurs d'indicateurs sont des agents réducteurs choisis parmi les polymères redox-actifs contenant un ou plusieurs groupes fonctionnels oxydables, et/ou
les protecteurs d'indicateurs ont un effet catalytique et/ou adsorbant et sont choisis parmi un matériau comprenant du charbon actif, de la zéolite et/ou de l'oxyde semi-conducteur qui est éventuellement chargé de métal noble.

2. Elément capteur optique selon la revendication 1, **caractérisé en ce que** la au moins une couche (1) portant un protecteur d'indicateur est exempte ou pratiquement exempte d'indicateurs.

3. Elément capteur optique selon l'une des revendications précédentes, **caractérisé en ce que** les protecteurs d'indicateur sont disposés dans une couche (1) qui est en contact avec le milieu et/ou dans au moins une couche de l'élément qui est tournée vers le milieu et qui est appliquée sur la couche (1) qui est en contact avec le milieu, et les indicateurs sont disposés dans au moins une couche (2) qui est appliquée sur la face du ou des couches (1) portant le protecteur d'indicateur qui est tournée en dehors du milieu.

4. Elément capteur optique selon l'une des revendications précédentes, **caractérisé en ce que** la couche (1) en contact avec le milieu est opaque et/ou la au moins une autre couche (2) réfléchit la lumière.

5. Elément capteur optique selon l'une des revendications précédentes, **caractérisé en ce que** l'élément comprend
(i) une couche (1), éventuellement opaque, en contact avec le fluide, qui est exempte ou pratiquement exempte d'indicateurs et qui contient éventuellement des protecteurs d'indicateurs,
(ii) une deuxième couche qui est
(iia) appliquée sur la face de la première couche (1) tournée vers l'extérieur du milieu,
(iib) qui comprend des protecteurs d'indicateurs,
(iic) libre ou pratiquement exempt d'indicateurs et
(iid) facultativement réfléchissant la lumière,
(iii) une troisième couche (2) qui est
(iiia) appliquée sur le côté de la deuxième couche éloigné du support,
(iiib) contient les indicateurs,
(iiic) exempt ou pratiquement exempt de protecteurs d'indicateurs ; et
(iiid) facultativement réfléchissant la lumière.

6. Elément capteur optique selon l'une des revendications précédentes, **caractérisé en ce que** la (les) couche(s) de protection de l'indicateur (1) est (sont) séparée(s) de la (des) couche(s) de support de l'indicateur (2) par au moins une couche réfléchissant la lumière (LRS).

7. Elément capteur optique selon l'une des revendications précédentes, **caractérisé en ce que** les protecteurs d'indicateur sont présents dans la au moins une couche porteuse de protecteur d'indicateur (1) sous la forme de particules ayant un diamètre de 0,1 µm à 200 µm ou de 0,2 µm à 100 µm ou de 0,5 µm à 50 µm.

8. Elément capteur optique selon l'une des revendications précédentes, **caractérisé en ce que** la proportion de protecteurs d'indicateur dans la couche (1) portant au moins un protecteur d'indicateur est d'au moins 2% en poids ou 2 à 75% en poids ou 20 à 50% en poids.

9. Elément capteur optique selon l'une des revendications précédentes, **caractérisé en ce que** les au moins deux couches (1, 2) de l'élément sont différentes en termes d'épaisseur de couche et/ou de composition de leur matériau de matrice.

10. Elément capteur optique selon l'une des revendications précédentes, **caractérisé en ce que** les au moins deux couches (1, 2) sont différentes en ce qui concerne le type, la concentration et/ou le degré de réticulation des composants de base en polymère.

11. Elément capteur optique selon l'une des revendications précédentes, **caractérisé en ce que** le matériau de matrice est choisi parmi le polystyrène, le polychlorure de vinyle, le polyméthacrylate d'alkyle, en particulier le polyméthacrylate de méthyle, le polyisobutylméthacrylate et le poly-2-hydroxyéthylméthacrylate, le poly-α-methyl styrene, les gels de silice, les sol gels, hydrogels, polyuréthanes, polytétrahydrofuranes, polytétrafluoroéthylène, polytétrafluoroéthylène, polyesters, polybutadiène, polyvinylbutyral, polyéthylacrylate, éthylcellulose, triacétate de cellulose, acétyl butyrate de cellulose, polysulfones, polysulfides, silicones, silicones fluorées et leurs combinaisons, éventuellement en combinaison avec des plastifiants.

12. Capteur comprenant au moins un élément de capteur selon l'une des revendications précédentes et éventuellement une source d'énergie qui stimule l'émission de luminescence des indicateurs et une unité de détection, et éventuellement comprenant en outre une unité d'évaluation.

13. Elément capteur ou capteur selon l'une des revendications précédentes pour la détection d'oxygène moléculaire dans un milieu gazeux ou liquide et/ou pour la détermination de la teneur en oxygène moléculaire d'un milieu gazeux ou liquide, **caractérisé en ce que** la au moins une couche protectrice indicatrice (1) de l'élément capteur est conçue de telle manière, **en ce que** le taux de diffusion de l'oxygène moléculaire formé dans les protecteurs indicateurs par réduction des agents oxydants forts dans le milieu est supérieur à celui de l'oxygène moléculaire du milieu dans la direction de la au moins une couche porteuse (2) de molécules indicatrices.

14. Utilisation d'un élément capteur ou d'un capteur selon l'une des revendications précédentes pour la détermination quantitative et/ou qualitative d'un ou plusieurs analytes dans un milieu, en particulier pour la détection de l'oxygène moléculaire dans un milieu gazeux ou liquide et/ou pour déterminer la teneur en oxygène moléculaire d'un milieu gazeux ou liquide.

15. Procédé pour la détermination quantitative et/ou qualitative d'un ou plusieurs analytes dans un milieu, comprenant la mise en contact du milieu avec un élément capteur tel que défini dans l'une des revendications 1 à 11, dans lequel la mise en contact a lieu au niveau de la couche (1) en contact avec le milieu de l'élément capteur, dans lequel l'analyte est de préférence l'oxygène moléculaire et dans lequel le procédé comprend éventuellement la détection du ou des analytes par mesure de l'intensité et/ou de l'affaiblissement de la luminescence des indicateurs et/ou la mesure de l'extinction par la luminescence par modulation de phase.
